# EUROPÄISCHE PATENTANMELDUNG

(11) **EP 0 984 174 A2**
(43) Veröffentlichungstag der Anmeldung: **08.03.2000**
(21) Anmeldenummer: 99113379.4
(22) Anmeldetag: 10.07.1999
(51) Int. Cl.: F16B 9/02, F16M 13/00

(54) **Vorrichtung zur lösbaren Halterung eines Rohres**

(30) Priorität: 01.08.1998 DE 19834768
(71) Anmelder: Matherly, Andrea, 8706 Meilen (CH)
(72) Erfinder: Matherly, John, Dr., 8706 Meilen (CH)
(74) Vertreter: Engelhardt, Guido, Dipl.-Ing.

(57) **Zusammenfassung**

Bei einer Vorrichtung (1) zur lösbaren Halterung eines Rohres (2) an einem Halteglied (11) mit einem das Rohr (2) umschließenden Spannband (5) und einer Schraube (17), mittels der das Spannband (5) mit dem Halteglied (11) verspannbar ist, soll auf einfache und schnelle Weise bedient werden können, damit mittels der Befestigung des Rohres (2) an der Vorrichtung (1) ein dreidimesionales gestell aufgebaut werden kann.
Dies wird dadurch erzielt, daß die beiden Enden des Spannbandes (5) in dem Halteglied (11) arretiert sind, daß eine oder beide in Richtung der Längsachse (3) des Rohres (2) verlaufenden Spannflächen (13) des Haltegliedes (11) eine Vertiefung aufweisen und daß die Schraube (17) mit den Spannflächen (13) zugeordneten Spanngliedern (21) versehen ist, durch die das Spannband (5) gegen die Spannflächen (13) des Haltegliedes (11) preßbar ist.

## Beschreibung

Die Erfindung betrifft eine Vorrichtung zur lösbaren Halterung eines Rohres an einem Halteglied mit einem das Rohr umschließenden Spannband und einer Schraube, mittels der das Spannband mit dem Halteglied verspannbar ist.

In der DE 43 04 239 A1 ist eine Befestigungsvorrichtung offenbart, die ein mit einem Kanal ausgestatteten Halteglied aufweist, in den die beiden Enden des Spannbandes einführbar und mittels zweier Schrauben gehalten sind. Über das Hatteglied ist des weiteren eine v-förmig ausgebildete Haube geschoben, die ebenfalls mittels den beiden Schrauben am Halteglied befestigt ist.

Durch das Einschrauben der beiden Schrauben wird das Spannband in die Schraubenöffnungen gedrückt, so daß sich die Bogenlänge des Spannbandes verringert, wodurch auf das Rohr radial nach innen wirkende Spannkräfte entstehen, die somit das Halteglied am Rohr fixieren.

Als nachteilig bei dieser Vorrichtung hat es sich gezeigt, daß an dem Halteglied nicht nur das Spannband, sondern auch die Haube zu befestigen ist, um eine Fixierung des Haltegliedes am Rohr zu erzielen. Diese Anordnung ist somit konstruktiv, aufwendig ausgestaltet, und die Montage sowie die Demontage der Vorrichtung ist äußerst zeitaufwendig.

Darüber hinaus wirkt die von den Schrauben aufgebrachte Haltekraft senkrecht auf die Längsachse des Rohres, so daß die Enden des Spannbandes umzubiegen sind, um diese mit dem Halteglied arretieren zu können.
Die durch diese Anordnung erzeugte Haltekraft ist gering, da die aufzubringende Spannkraftrichtung senkrecht zur Längsachse des Rohres verläuft, so daß zur Verringerung der Bogenlänge des Spannbandes die Spannbandenden weit in das Halteglied eingeschraubt werden müssen, um einen zuverlässigen Halt zwischen der Mantelfläche des Rohres und des Spannbandes zu erzielen.

Aufgabe der Erfindung ist es daher, eine Vorrichtung zur lösbaren Halterung eines Rohres an einem Halteglied zu schaffen, die auf einfache und schnelle Weise bedient werden kann und mit der eine feste Verbindung zwischen dem Rohr und dem Halteglied zum Aufbau eines dreidimensionalen Gestelles erzielbar ist, wobei zur Erzeugung der Haltekraft ein kleiner Verstellweg der Spannbandenden ausreichen sein soll. .

Diese Aufgabe wird erfindungsgemäß dadurch gelöst, daß die beiden Enden des Spannbandes in dem Halteglied arretiert sind, daß eine oder beide in Richtung der Längsachse des Rohres verlaufenden Anlageflächen des Haltegliedes eine Vertiefung aufweisen und daß die Schraube mit den Anlageflächen zugeordneten Spanngliedern versehen ist, durch die das Spannband gegen die Anlageflächen des Haltegliedes preßbar ist.

Um die sichere Arretierung des Spannbandes an dem Halteglied zu bewerkstelligen, sind in den Anlagenflächen des Haltegliedes zwei Aufnahmennuten eingearbeitet, und die beiden Enden des Spannbandes weisen jeweils eine Abkantung auf, und daß die jeweilige Abkantung in der Aufnahmenut an einer Seitenfläche anliegt.

Die radiale Verkürzung des Spannbandes und somit die Erzeugung von Spannkräften um das Rohr wird dadurch bewerkstelligt, daß die in die Spannflächen des Spannbandes eingearbeiteten Vertiefungen konkav gekrümmt und die diesen zugekehrten Gegenflächen der Spannglieder korrespondierend konvex gekrümmt ausgebildet sind.

Zur Befestigung der Spannglieder am Spannband sind eines oder beide Spannglieder auf den einander zugekehrten Innenseiten mit einem im Querschnitt mehrkantig, vorzugsweise quadratisch, ausgebildeten Ansatzstück versehen, in denen die Spannschraube geführt ist und die in das Spannband eingearbeitete schlitzartige Ausnehmungen durchgreifen und in eine Freisparung des Haltegliedes eingreifen.

Damit mehrere Halteglieder in einem Zwischenstück befestigt werden können, so daß mehrere Rohre in einem gemeinsamen Knotenpunkt gehalten sind, ist es möglich, an einem Halteglied zwei Vorrichtungen vorzusehen und zwischen den beiden Vorrichtungen eine Bohrung mit einer Auflagefläche für eine Schraube einzuarbeiten.

Weitere vorteilhafte Ausgestaltungen der Erfindung ergeben sich aus den Unteransprüchen.

Aufgrund der Anordnung und Ausgestaltung des Haltegliedes und des Spannbandes ist ein Lösen oder ein Fixieren der Vorrichtung an einem Rohr schnell und zuverlässig möglich, da lediglich das Halteglied zunächst zu halten ist, um gleichzeitig die Spannschraube zu- oder aufzudrehen. Die Spannkräfte entstehen durch die radiale Verkürzung des Spannbandes, da dieses in die konvex gekrümmt ausgebildete Vertiefung der Spannflächen eingedrückt wird, so daß eine Verkürzung der Bogenlänge des Spannbandes entsteht, die radial wirkende Kräfte erzeugt, die die Vorrichtung sicher am Rohr arretieren.
Die Wirkungslinie der Spannkräfte verläuft demnach senkrecht zur Querachse des Rohres, so daß die Verkürzung der Bogenlänge des Spannbandes im Prinzip durch ein Zusammendrücken der Enden des Spannbandes erzielbar ist.

Mit mehreren miteinander verbundenen Haltegliedern können mehrere Rohre auf schnelle und einfache Art und Weise miteinander fixiert werden, so daß ohne aufwendige Montagearbeiten ein Gerüst, ein Gestell oder dergleichen entsteht.

Darüber hinaus ist der geometrische Querschnitt des Rohres nicht entscheidend, da durch den Einsatz von unterschiedlich langen Spannbändern unterschiedlich groß bemessene Rohre miteinander verbunden werden können. Des weiteren können nicht nur Rundrohre, sondern auch Vierkantrohre als Teil des Gestells miteinander arretiert werden.

Anhand einer Zeichnung ist eine erfindungsgemäße Ausführungsform erläutert. Im einzelnen zeigt:
- Fig. 1: eine Vorrichtung mit einem um ein Rohr gelegtes Spannband im Schnitt,
- Fig 2: die Vorrichtung gemäß Fig. 1 im arretierten Zustand,
- Fig. 3: die Vorrichtung gemäß Fig. 2 in Seitenansicht,
- Fig. 4: zwei Vorrichtungen gemäß Fig. 2, die mittels Schrauben an einem Zwischenstück zur Halterung von zwei senkrecht zueinander verlaufenden Rohren miteinander verbunden sind,
- Fig. 5: zwei Vorrichtungen gemäß Fig. 4, die an einem Drehgelenk angebracht sind.
- Fig. 6: ein dreidimensionales Rohrgebilde, das mittels zweier Vorrichtungen gemäß Figur 1 sowie mittels eines Rohreinsatzes und einer darin eingreifenden Schraube zusammengehalten ist, und
- Fig. 7: ein Schnitt entlang der Linie VII-VII der Figur 6.

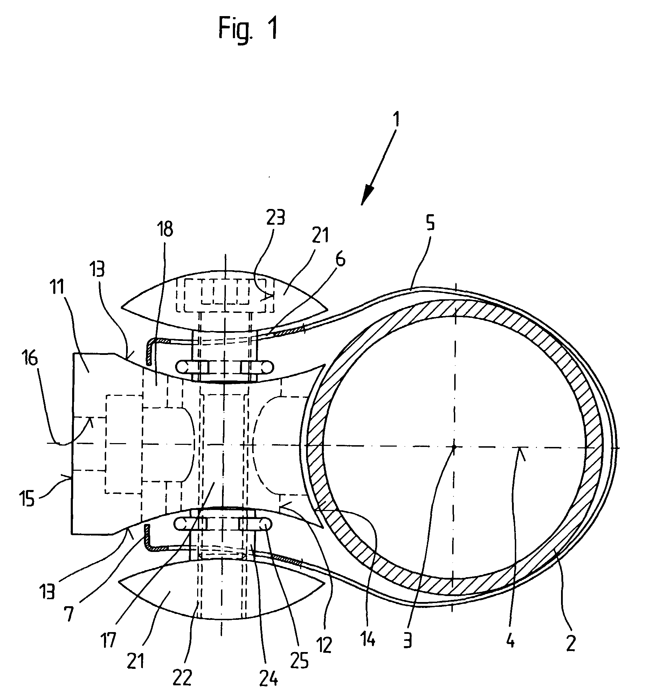

In der Figur 1 ist eine an einem Rohr 2 anzubringende Vorrichtung 1 dargestellt, die dazu dient, mehrere Rohre in unterschiedlichen Positionen zueinander lösbar zu verbinden.

Zur Festlegung eines Koordinatensystems ist, ausgehend von der Lage des Rohres 2, dessen Längsachse mit 3 und dessen Querachse mit 4 bezeichnet.

In Umfangsrichtung des Rohres 2 ist ein aus Federstahl oder ähnlichem Material bestehendes Spannband 5 vorgesehen, das das Rohr 2 umgreift und flächig im montierten Zustand am Rohr 2 anliegt. Im jeweiligen Endbereich des Spannbandes 5 sind in diesem zwei Langlöcher 6 eingearbeitet, die im montierten Zustand fluchtend übereinander liegen.
Des weiteren sind die beiden Enden des Spannbandes 5 derart ausgebildet, daß zwei aufeinander zugekehrte Abkantungen 7 entstehen.

Zwischen den im wesentlichen parallel zu der Querachse 4 verlaufenden Enden des Spannbandes 5 ist ein Halteglied 11 vorgesehen, das zwei in Richtung zur Querachse 4 liegende Spannflächen 13 aufweist. Das Halteglied 11 ist räumlich betrachtet ein Quader oder ein Würfel mit entsprechend ausgebildeten Seitenflächen.

Im Halteglied 11 ist senkrecht zu der Querachse 4 eine Bohrung 12 zur Aufnahme einer Schraube 17 eingearbeitet.

Mit den beiden Spannflächen 13 wirken zwei Spannglieder 21 zusammen, die mittels der Schraube 17 auf die Spannflächen 13 gepreßt werden. Zwischen der einen Spannfläche 13 und dem einem Spannglied 21 ist jeweils ein Ende des Spannbandes 5 angeordnet, so daß diese mittels Reibkräften am Halteglied 11 durch die Spannglieder 21 gehalten sind.

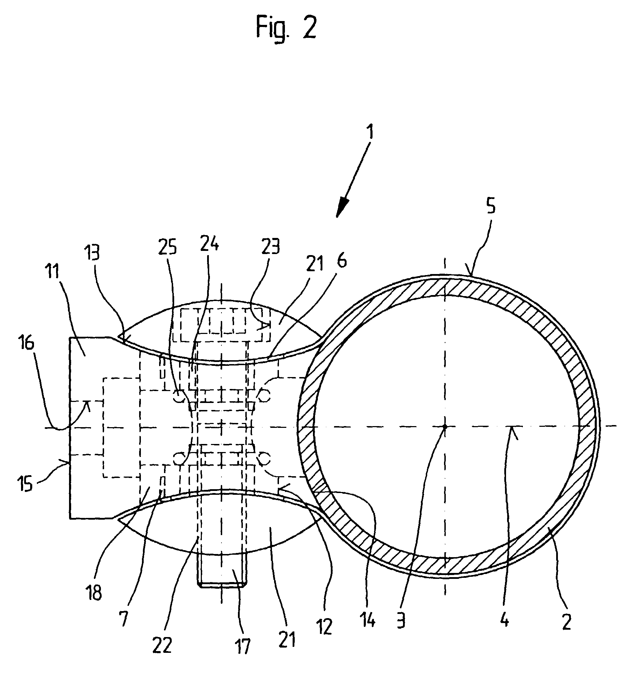

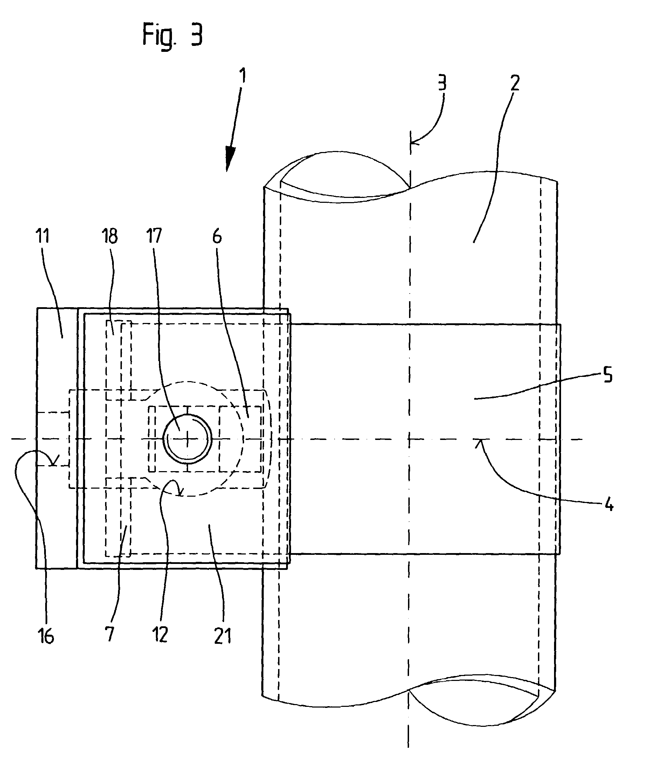

In der Figur 2 und 3 ist dargestellt, daß die Vorrichtung 1 fest mit dem Rohr 2 verbunden ist. Zur sicheren Arretierung der beiden Enden des Spannbandes 5 sind im Halteglied 11 zwei gegenüberliegende in den Spannflächen 13 eingearbeitete Nuten 18 vorgesehen, in die jeweils eine der Abkantungen 7 eingreift und dort gegen Verrutschen gesichert ist.

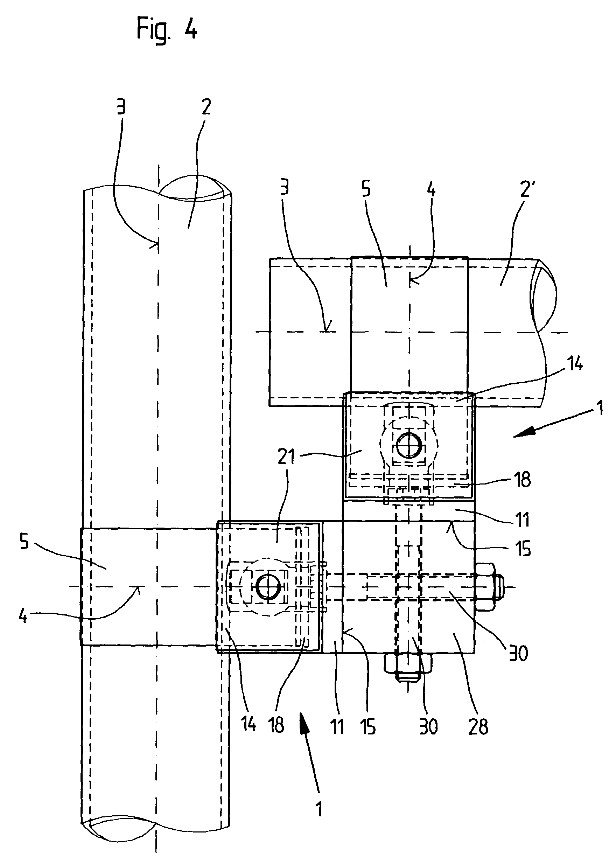

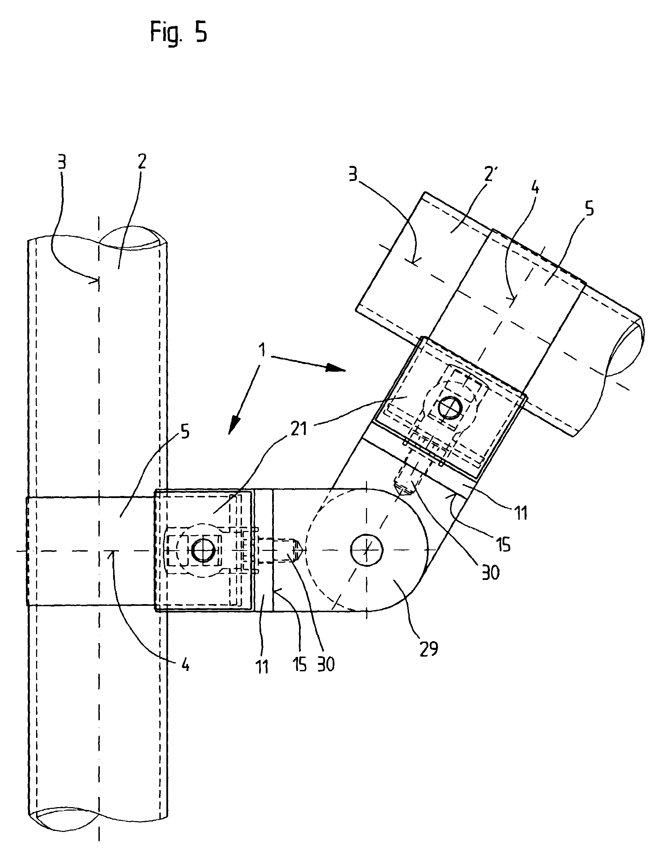

Zur Optimierung der Kraftaufnahme zwischen dem Rohr 2 und dem Halteglied 11 ist eine an dem Rohr 2 anliegende Anlagefläche 14 derart ausgebildet, daß diese den gleichen Krümmungsradius aufweist wie das Rohr 2, also konkav gekrümmt ist. Somit liegt das Halteglied 11 im montierten Zustand fest in Umfangsrichtung am Rohr 2 an und stützt sich an diesem ab. Die der Anlagefläche 14 gegenüberliegende Fläche 15 ist eben ausgebildet, so daß an dieser ein Zwischenstück 28 oder ein Drehgelenk 29 montierbar ist, wie dies in den Figuren 4 und 5 gezeigt ist.

Um den Durchmesser des Spannbandes 4, wie dieser in Figur 1 dargestellt ist, derart zu verkleinern, daß das Spannband 5 fest am Rohr 2 in Umfangsrichtung anliegt, wie dies in Figur 2 und 3 gezeigt ist, sind die beiden Spannflächen 13 des Haltegliedes 11 in Form einer Vertiefung mit einer konkav gekrümmten Oberfläche ausgebildet.
Beim Verspannen der Spannglieder 21 werden somit die beiden Enden des Spannbandes 5 zunächst in die Nut 18 eingedrückt und dort gegen Verrutschen seitlich gehalten, und zusätzlich werden die beiden Enden des Spannbandes 5 in die Vertiefung der Spannflächen 13 gedrückt und flächig zwischen diesen und dem einzelnen Spannglied 21 eingepreßt und somit mittels Reibkräften arretiert. Dabei verhindern die Abkantungen 7 ein Verrutschen der Enden des Spannbandes 5 in Richtung der Längsachse 3 sowie der Querachse 4 des Rohres 2.

Aufgrund des Zusammendrückens der Spannbandenden verkleinert sich die Bogenlänge des Spannbandes 5, so daß Haltekräfte zwischen dem Spannband 5 und dem Rohr 2 entstehen, die radial in Richtung auf die Längsachse 4 einwirken, und demzufolge das Spannband 5 am Rohr 2 halten.

Die geometrische Querschnittsform der Spannglieder 21, die mit der jeweiligen Spannfläche 13 zusammen wirkt, ist dabei als konvex gekrümmte Fläche ausgebildet, deren Abmessung mit der Form der Spannfläche 13 korrespondiert.

An einem der Spannglieder 21 ist eine Sackbohrung 23 zur vollständigen Aufnahme des Schraubenkopfes 17 vorgesehen. In das andere Spannglied 21 ist ein Gewinde 22 eingearbeitet.
Beide Spannglieder 21 weisen ein quadratisch ausgebildetes Ansatzstück 24 auf, das durch das Langloch 6 des Spannbandes 5 hindurchgeführt und mittels eines Sicherungsringes 25 gegen Herausrutschen gesichert ist.
Das Ansatzstück 24, das dem Spannglied 21 mit dem Gewindeeinsatz 22 zugeordnet ist, ist dabei aus Metall hergestellt, so daß in dieses das Gewinde unmittelbar eingearbeitet ist.

Die beiden im Spannband 5 eingearbeiteten Langlöcher 6 weisen einen mit der quadratischen Querschnittsform der Ansatzstücke 24 korrespondierende Querschnittsform auf so daß die Spannglieder 21 verdrehsicher am Spannband 5 im ummontierten Zustand gehalten sind.
Darüber hinaus wirken die Ansatzstücke 24 im montierten Zustand als Anschlag und sichern somit das Spannband 5 zusätzlich, beispielsweise, wenn die Abkantung 7 aus der Nut 18 rutscht.

Aus den Figuren 4 und 5 sind zwei Vorrichtungen 1 an zwei unterschiedlichen Rohren 2 und 2' gezeigt, die über das Zwischenstück 28 oder das Drehgelenk 29 mittels Schrauben 30 miteinander verbunden sind. Mit einer solchen Befestigung können eine Vielzahl von Rohren senkrecht, parallel und/oder in einem beliebigen Winkel zueinander fest miteinander verbunden werden, so daß ein dreidimensionales Gestell oder dergleichen entsteht.

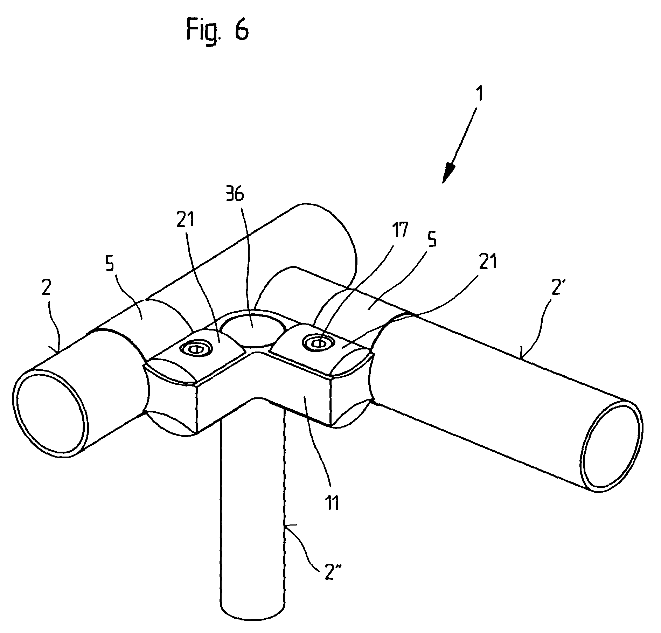

Ein solches dreidimensionales Rohrgebilde ist ausschnittsweise der Figur 6 zu entnehmen. Dort ist gezeigt, daß zwei Vorrichtungen 1 in einem Winkel von 90° fest miteinander verbunden sind, da diese an einem Halteglied 11 angebracht sind.

Senkrecht zu der durch diese Vorrichtung 1 und den fixierten Rohre 2 und 2' gebildeten Ebene verläuft ein drittes Rohr 2'', das ebenfalls am Halteglied 11 befestigt ist.
Somit bildet das Halteglied 11 einen Knotenpunkt für drei Rohre.

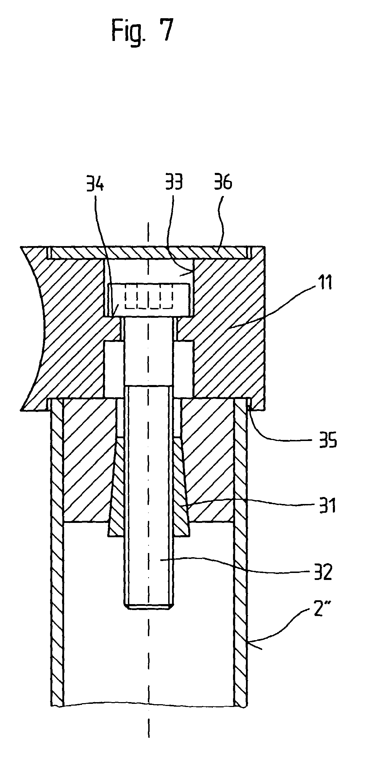

Aus der Figur 7 ist die Befestigung des dritten Rohres am Halteglied 11 gezeigt. Zu diesem Zweck ist in diesem Rohr 2 ein Einsatzstück 31 eingearbeitet, das sich radial nach außen aufspreitzen kann, wenn beispielsweise eine Schraube 32 eingedreht wird.
Das Haltglied 11 weist eine Bohrung 33 mit einer Auflagefläche 34 auf, durch die die Schraube 32 einführbar ist. Der Gewindekopf der Schraube 32 ist dabei im Inneren des Haltegliedes 11 angeordnet.
Die Längsachse der Schraube 32 verläuft im montierten Zustand fluchtend zu der Längsachse des derart befestigten Rohres 2''.
Zur Aufnahme und radialen Fixierung des Rohres 2'' weist das Halteglied 11 einen Bund 35 auf, der dem Durchmesser des Rohres 2'' in etwa entspricht, so daß das Rohr 2'' während der Befestigung nicht verrutscht.

Um beispielsweise die Optik des dreidimesnionalen Rohrgestelles variieren und an unterschiedliche Bedingungen anpassen zu können, ist die Bohrung 33 am Halteglied 11 mittels einer Abdeckplatte 36 verschließbar, die aus unterschiedlichen Materialien und Farbgebungen bestehen kann, so daß diese Knotenpunkten farblich hervorgehoben sind.

## Patentansprüche

1. Vorrichtung (1) zur lösbaren Halterung eines Rohres (2) an einem Halteglied (11) mit einem das Rohr (2) umschließenden Spannband (5) und einer Schraube (17), mittels der das Spannband (5) mit dem Halteglied (11) verspannbar ist,
**dadurch gekennzeichnet,**
daß die beiden Enden des Spannbandes (5) in dem Halteglied (11) arretiert sind,
daß eine oder beide in Richtung der Längsachse (3) des Rohres (2) verlaufenden Spannflächen (13) des Haltegliedes (11) eine Vertiefung aufweisen und daß die Schraube (17) mit den Spannflächen (13) zugeordneten Spanngliedern (21) versehen ist, durch die das Spannband (5) gegen die Spannflächen (13) des Haltegliedes (11) preßbar ist.

2. Vorrichtung nach Anspruch 1,
**dadurch gekennzeichnet,**
daß zur Arretierung des Spannbandes (5) in dem Halteglied (11) in dessen Spannflächen (13) zwei Aufnahmenuten (18) eingearbeitet sind, daß die beiden Enden des Spannbandes (5) jeweils eine Abkantung (7) aufweisen, und daß die jeweilige Abkantung (7), vorzugsweise in Richtung der Querachse (4), an einer Seitenfläche der Aufnahmenut (18) anliegt.

3. Vorrichtung nach Anspruch 1 oder 2,
**dadurch gekennzeichnet,**
daß die in die Spannflächen (13) des Haltegliedes (11) eingearbeiteten Vertiefungen konkav gekrümmt und die diesen zugekehrten Gegenflächen der Spannglieder (21) korrespondierend konvex gekrümmt ausgebildet sind.

4. Vorrichtung nach einem oder mehreren der
Ansprüche 1 bis 3,
**dadurch gekennzeichnet,**
daß eines oder beide Spannglieder (21) auf den einander zugekehrten Innenseiten mit einem im Querschnitt mehrkantig, vorzugsweise quadratisch, ausgebildeten Ansatzstück (24) versehen sind, in denen die Spannschraube (17) geführt ist und die in das Spannband (5) eingearbeitete schlitzartige Ausnehmungen (6) durchgreifen und in eine Freisparung (12) des Haltegliedes (11) eingreifen.

5. Vorrichtung nach einem oder mehreren der
Ansprüche 1 bis 4,
**dadurch gekennzeichnet,**
daß zur winkeligen Verbindung zweier Rohre (2) mit einem Halteglied (11) in dieses um 90° zueinander versetzt angeordnete Aufnahmenuten (18) mit zugeordneten Spannflächen (13) für zwei einander gegenüberliegender Spannbänder (5) vorgesehen sind.

6. Vorrichtung nach einem oder mehreren der vorgenannten Ansprüche,
dadurch gekennzeichnet,
daß mindestens zwei Halteglieder (11) über ein Zwischenstück (28) oder ein Drehgelenk (29) miteinander verbindbar sind.

7. Vorrichtung nach einem oder mehreren der vorgenannten Ansprüche,
**dadurch gekennzeichnet,**
daß an dem Halteglied (11) mindestens zwei Vorrichtungen (1) vorgesehen sind, und daß zwischen den beiden Vorrichtungen (1) eine Bohrung (33) mit einer Auflagefläche (34) für eine Schraube (32) eingearbeitet ist.

8. Vorrichtung nach Anspruch 7,
**dadurc**h **gekennzeichnet,**
daß das mit dem Halteglied (11) zu verbindene Rohr (2'') in seinem Inneren ein Einsatzstück (31) aufweist, das durch das Eindrehen der Schraube (32) radial nach außen aufspreizbar ist.

9. Vorrichtung nach einem der Ansprüche 7 und/ oder 8,
**dadurch gekennzeichnet,**
daß das Halteglied (11) zur radialen Fixierung des senkrecht zu diesem anzubringenden Rohres (2) einen Bund /35) aufweist.

10. Vorrichtung nach einem oder mehreren der Ansprüche 7 bis 9,
**dadurch gekennzeichnet;**
daß die Bohrung (33) des Haltegliedes (11) mittels einer Abdeckplatte (36) verschließbar ist.
